Europäisches Patentamt

European Patent Office

Office européen des brevets

(11) Veröffentlichungsnummer: **0 416 603 B1**

(12) **EUROPÄISCHE PATENTSCHRIFT**

(45) Veröffentlichungstag der Patentschrift: **18.05.94**

(51) Int. Cl.5: **G02B 6/28**

(21) Anmeldenummer: **90117142.1**

(22) Anmeldetag: **06.09.90**

(54) **Ouarzglasfaser-Schmelzkoppler.**

(30) Priorität: **08.09.89 DE 3929946**

(43) Veröffentlichungstag der Anmeldung:
**13.03.91 Patentblatt 91/11**

(45) Bekanntmachung des Hinweises auf die
Patenterteilung:
**18.05.94 Patentblatt 94/20**

(84) Benannte Vertragsstaaten:
**AT BE CH DE ES FR GB IT LI NL SE**

(56) Entgegenhaltungen:
**EP-A- 0 293 289**
**WO-A-84/04822**

(73) Patentinhaber: **kabelmetal electro GmbH**
**Postfach 260**
**D-30002 Hannover(DE)**

(84) Benannte Vertragsstaaten:
**DE**

(73) Patentinhaber: **ALCATEL N.V.**
**Strawinskylaan 341,**
**(World Trade Center)**
**NL-1077 XX Amsterdam(NL)**

(84) Benannte Vertragsstaaten:
**BE CH ES FR GB IT LI NL SE AT**

(72) Erfinder: **Heinlein, Walter, Prof. Dr.-Ing.**
**Spinozastrasse 20**
**D-6750 Kaiserslautern(DE)**
Erfinder: **Hauff, geb. Heun, Thomas, Dipl.-Ing.**
**Ländelstrasse 40**
**D-6750 Kaiserslautern(DE)**
Erfinder: **Stieb, Werner, Dipl.-Ing.**
**Am Krummen Bach 8**
**D-3060 Stadthagen(DE)**
Erfinder: **Oehler, Albrecht M., Dipl.-Ing.**
**Talstrasse 95**
**D-6750 Kaiserslautern(DE)**

(74) Vertreter: **Mende, Eberhard, Dipl.-Ing.**
**Dipl.-Ing. Eberhard Mende**
**Dipl.-Ing. Roger Döring**
**Patentassessoren,**
**Postfach 2 60,**
**Kabelkamp 20**
**D-30002 Hannover (DE)**

## Beschreibung

Die Erfindung betrifft einen bikonisch getaperten Quarzglasfaser-Schmelzkoppler, der durch Verschmelzen und Ziehen in Längsrichtung von zwei parallel zueinander angeordneten Glasfasern herstellbar ist, die je einen dotierten Kern und eine definierte radialsymmetrische Brechungsindexverteilung aufweisen (siehe z.B. EP-A-0 293 289).

Quarzglasfaser-Schmelzkoppler sind wichtige Komponenten in optischen Netzwerken. Von besonderem Interesse in optischen Übertragungssystemen sind polarisationsunabhängige Koppler mit geringen Verlusten für eine Wellenlänge (SWC-single-wavelength coupler), Wellenlängen Multiplexer (WDM-wavelength division-multiplexer) und wellenlängenunabhängige Koppler (WIC-wavelength independent coupler).

Eine wichtige Größe zur Charakterisierung von Kopplern ist das Koppelverhältnis c, welches folgendermaßen definiert ist:

$$c := \frac{P_3}{P_3 + P_4}$$

worin $P_3$ und $P_4$ die Ausgangsleistungen des Kopplers sind.

Das Koppelverhältnis c ist eine im allgemeinen von der Wellenlänge abhängige Funktion, welche den Typ des Kopplers charakterisiert.

### 1) Koppler mit schwacher Kopplung

Wenn bei zwei parallel zueinander verlaufenden Wellenleitern (Quarzglasfaser-Kerne) die quergedämpften Felder einer der Eigenwellen eines Faserkernes nur mit schwachen Ausläufern bis zu dem anderen Faserkern reichen, wodurch die Eigenwellen miteinander koppeln, spricht man von einer schwachen Kopplung. Bei Kopplern mit schwacher Kopplung werden die x- bzw. y-polarisierten Grundmoden und die ersten ungeraden x- bzw. y-polarisierten Obermoden in der Koppelzone durch die Kerne der gekoppelten Fasern geführt. Die Länge der Koppelzone ist relativ groß (Koppelzonenlänge >10 mm). Die Grund- und Obermoden weisen lokale Maxima der Intensitätsverteilung im Bereich der Kerne auf.

### 2) Koppler mit starker Kopplung

Beim starken Koppler besitzen die Eingangs- und Ausgangstore des Vierpols einen gemeinsamen Wellenleiter. Bei Quarzglasfaserkopplern als bikonische Taperkoppler wird die Schmelzzone soweit getapert, daß die Führung des Grundmodus durch die Kerne nicht mehr vorhanden ist und das Feld vom Übergang Mantel-umgebendes Medium geführt wird. Wegen des größeren Querschnitts sind wenigstens zwei Moden ausbreitungsfähig, die eine gemeinsame Koppelzone mit unterschiedlichen Ausbreitungskonstanten durchlaufen und interferieren. Die Form des Querschnitts der Koppelzone bestimmt die Orientierung der Moden. Der Querschnitt solcher Taperkoppler ist i.a. hantelförmig, die Länge der Koppelzone ist relativ klein (< 1 mm).

Um bei Übertragungssystemen mit variierender Polarisation des optischen Signales eine ungestörte Datenübertragung zu gewährleisten, muß das Koppelverhältnis c von dem jeweiligen Polarisationszustand des Lichtes am Eingangstor unabhängig sein.

Der vorliegenden Erfindung liegt die Aufgabe zugrunde, einen Koppler anzugeben, der polarisationsunabhängig ist und eine starke Kopplung möglich macht.

Diese Aufgabe wird durch die Merkmale des kennzeichnenden Teils des Anspruchs 1 gelöst, d.h. daß die relative Brechzahldifferenz $\Delta$ der Kerne innerhalb der Koppelzone zwischen 0,04 und 0,2 %, vorzugsweise zwischen 0,06 und 0,1 % liegt. Die relative Brechzahldifferenz $\Delta$ ist definiert als

$$\Delta = \frac{(n^2_{Kern} - n^2_{SiO_2})}{2n^2_{Kern}}$$

Die relative Brechzahldifferenz der Kerne bedeutet, wie die Formel erkennen läßt, die relative Brechzahldifferenz eines jeden einzelnen Kernes in Bezug auf undotiertes Quarzglas ($n_{SiO_2}$), welches den Mantel (cladding) der Fasern bildet.

Die Führung der Kerne ist aufgrund der kleinen Brechzahldifferenz $\Delta$ so gering, daß die Intensitätsverteilung der x- und y-polarisierten Grundmoden keine lokalen Maxima im Bereich der Kerne, sondern nur noch ein Maximum aufweist. Die Führungsstärke der Kerne ist jedoch ausreichend groß, um die Lage der Moden zu orientieren.

Mit besonderem Vorteil besitzt der Koppler einen kurzen kreiszylinderförmigen Wellenleiter mit zwei parallel laufenden Bereichen erhöhter Brechzahl als Zone starker Kopplung. Hierdurch wird die Orientierung der Moden durch Kerne noch verstärkt.

Der Koppler gemäß der Lehre der Erfindung hat den weiteren Vorteil, daß er als Koppler mit der Funktion eines Wellenlängenmultiplexers betrieben werden kann, wenn er aus zwei Fasern mit gleicher Kernbrechzahl besteht. Der Wellenlängenmultiplexer hat die Funktion, das Eingangssignal in Abhängigkeit von der Wellenlänge aufzuteilen. Durch die erfindungsgemäße niedrige relative Brechzahldifferenz $\Delta$ der Kerne in der Koppelzone weist die Leistungsverteilung der Grundmoden nur ein Maximum auf der Achse der zylinderförmigen Koppelzone auf und wird die Lage der Maxima der Oberwellen noch durch die Kerne bestimmt.

Die Koppelzonenlänge beträgt zwischen 1,0 und 10 mm, vorzugsweise zwischen 2,5 und 8 mm.

Soll ein Koppler mit wellenlängenunabhängigem Koppelverhältnis c bereitgestellt werden, ist es erforderlich, daß die Brechzahl der Kerne in der Koppelzone unterschiedlich ist. Dadurch kann erreicht werden, daß sich das einzige Leistungsmaximum der Grundmoden nur im Bereich des Kerns mit höherer Brechzahl befindet. Die Lage der Obermoden wird von beiden Kernen bestimmt.

Die Erfindung betrifft weiterhin ein Verfahren zur Herstellung eines Kopplers, der als wellenlängenunabhängiger Leistungsteiler eingesetzt werden soll.

Hierbei werden gleichartige Glasfasern verwendet, wobei eine der Glasfasern vor dem Zusammenschmelzen über einen Zeitraum von einigen Minuten auf eine Temperatur von 1300 bis 1400 °C erhitzt wird. Bei diesem Vorgehen diffundieren die Dotierungsstoffe vom Kern in die angrenzende Schicht, wodurch die Brechzahl des Kernes der erhitzten Glasfaser reduziert wird.

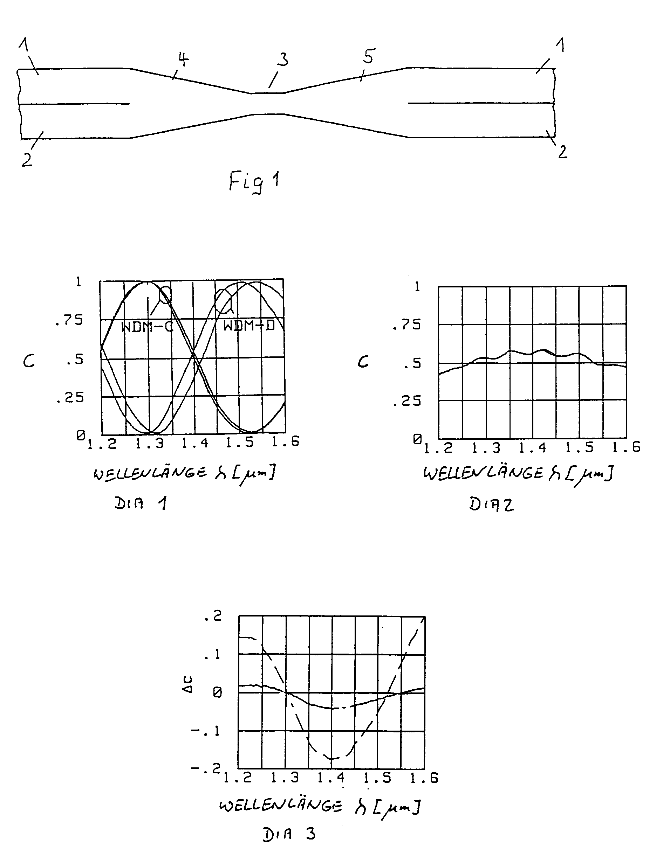

Die Erfindung ist anhand des in der Figur 1 schematisch dargestellten Ausführungsbeispiels sowie der Diagramme 1 bis 3 näher erläutert.

Aus zwei Quarzglasfasern 1 und 2 mit Gedotiertem Kern (match-cladding-fibre) wird der in der Fig. 1 dargestellte Schmelzkoppler hergestellt. Dazu wird zunächst von den Fasern 1 und 2 die nicht näher bezeichnete äußere Schicht (coating) entfernt. Eine der Quarzglasfasern wird während einer Zeitdauer von ca. 3 Min. an 1300 °C erhitzt, z.B. mittels einer Gasflamme. Durch diesen Prozeß wird die Kernbrechzahl n der Faser reduziert. Die so vorbereitete Faser wird dann wie an sich bekannt in einer nicht bezeichneten Nut neben die nicht vorbehandelte Faser gelegt und an das Ende einer der Fasern eine Lichtquelle, z.B. ein Laser angeschlossen. An die entgegengesetzten Enden der Fasern werden Empfänger angeschlossen, z.B. Photodioden. Die Fasern 1 und 2 sind in nicht dargestellten Einspannvorrichtungen gehalten. Der Parallellauf der Fasern 1 und 2 wird mit einer Gasflamme erwärmt auf ca. 1400 °C und durch Entfernen der Einspannvorrichtungen voneinander die schmelzflüssige Zone im Parallelverlauf der Fasern 1 und 2 im Querschnitt verringert. Während des Ziehprozesses wird das Koppelverhältnis c betrachtet und der Ziehprozeß beendet, sobald die gewünschten Werte vorliegen. Abschließend kann der Koppler z.B. auf einem Glasröhrchen fixiert werden. Diese Technik ist bekannt. Durch das Ziehen und die damit verbundene Reduzierung des Querschnittes der Fasern im Bereich des Kopplers sowie die während der Erhitzung der Fasern 1 und 2 auftretende Diffusion des Germaniums in die den Kernbereich der Faser umgebende Glasschicht ändert sich die Brechzahl n der Kerne und damit die relative Brechzahldifferenz $\Delta$.

Wesentlich im Sinne der Erfindung ist nun, daß die relative Brechzahldifferenz $\Delta$ der dotierten Kerne in Bezug auf undotiertes Quarzglas innerhalb der Koppelzone 3 kleiner als 0,1 % z.B. 0,06 % beträgt. Die Koppelzone 3 hat eine zylindrische Form von ca. 3 - 3,5 mm Länge, an die sich die konischen Übergänge 4 und 5 anschließen.

Der Unterschied zwischen den Brechzahlen der beiden Kerne wird wie oben beschrieben, durch Vorglühen einer der Fasern erreicht.

Der Schmelzkoppler nach der Lehre der Erfindung ist bezüglich seines Koppelverhältnisses weitgehend unabhängig von der Polarisation des Lichtes.

Diagramm 1 zeigt den Verlauf je zweier Kurven des Koppelverhältnisses C über der Wellenlänge für einen Koppler nach dem Stand der Technik mit hantelförmigem Querschnitt in der Koppelzone (WDM-D), sowie für einen erfindungsgemäßen Koppler aus zwei Fasern mit gleicher Kernbrechzahl, der einen kreiszylinderförmigen Querschnitt in der Koppelzone (WDM-C) aufweist. Die je zwei Kurven für den WDM-D und den WDM-C zeigen den Verlauf des Koppelverhältnisses C mit 0° Polarisationswinkel ($c_x$) und die seitlich verschobene Kurve den Verlauf mit 90° Polarisationswinkel ($c_y$) d. h. das Koppelverhältnis ändert sich mit der Polarisation des eingekoppelten Lichtes.

Die seitliche Verschiebung zeigt für den WDM-D eine starke Polarisationsabhängigkeit.

Die Kurven für den WDM-C laufen nahezu deckungsgleich, d.h. eine Abhängigkeit des Koppelverhältnisses von der Polarisation ist nicht vorhanden.

Das Diagramm 2 zeigt die Koppelverhältnisse $c_x$ und $c_y$ für einen erfindungsgemäßen Koppler mit unterschiedlichen Kernbrechzahlen, bei dem das Koppelverhältnis c näherungsweise wellenlängenunabhängig ist. Auch hier decken sich die Linien für $c_x$ und $c_y$, d.h. keine Abhängigkeit des Koppelverhältnisses c von der Polarisation.

Diagramm 3 zeigt die Abhängigkeit der Änderung des Koppelverhältnisses c von der Wellenlänge. Die durchgezogene Linie zeigt den Verlauf für einen erfindungsgemäßen Schmelzkoppler mit zylinderförmiger Koppelzone und unterschiedlichen Kernbrechzahlen und die gestrichelte Linie für einen Koppler mit hantelförmiger Koppelzone.

## Patentansprüche

1. Bikonisch getaperter Quarzglasfaser-Schmelzkoppler, der durch Verschmelzen und Ziehen in Längsrichtung von zwei parallel zueinander angeordneten Single-Mode-Fasern herstellbar ist, die je einen dotierten Kern und eine definierte radialsymmetrische Brechungsindexverteilung aufweisen, dadurch gekennzeichnet, daß die relative Brechzahldifferenz Δ eines jeden der dotierten Kerne in Bezug auf undotiertes Quarzglas innerhalb der Koppelzone zwischen 0,04 und 0,2 %, vorzugsweise zwischen 0,06 und 0,1 % liegt, so daß das Koppelverhältnis polarisationsunabhängig ist.

2. Koppler nach Anspruch 1, dadurch gekennzeichnet, daß der Koppler einen kurzen kreiszylinderförmigen Wellenleiter mit zwei parallellaufenden Bereichen erhöhter Brechzahl als Zone starker Kopplung besitzt.

3. Koppler nach Anspruch 1 oder 2, dadurch gekennzeichnet, daß die Koppelzonenlänge zwischen 1,0 und 10 mm, vorzugsweise zwischen 2,5 und 8 mm beträgt.

4. Koppler nach einem der Ansprüche 1 bis 3, dadurch gekennzeichnet, daß die Brechzahl der Kerne in der Koppelzone unterschiedlich ist, so daß das Koppelverhältnis zusätzlich wellenlängenunabhängig ist.

5. Verfahren zur Herstellung eines Kopplers nach Anspruch 4, bei dem zwei Single-Mode-Fasern, die je eine definierte radialsymmetrische Brechungsindexverteilung und einen dotierten Kern aufweisen, parallel zueinander angeordnet, miteinander verschmolzen und in Längsrichtung gezogen werden, wobei die Brechungsindexverteilung der Fasern so gewählt ist, daß nach dem Verschmelzen und Ziehen die relative Brechzahldifferenz Δ der dotierten Kerne in Bezug auf undotiertes Quarzglas innerhalb der Koppelzone zwischen 0,04 und 0,2% liegt, dadurch gekennzeichnet, daß zwei gleichartige Quarzglasfasern verwendet werden, und daß eine der Fasern vor dem Zusammenschmelzen über einen Zeitraum von einigen Minuten auf eine Temperatur von ca. 1300 °C bis 1400 °C erhitzt wird.

## Claims

1. Biconically tapered quartz glass fibre fusion coupler, which can be produced by fusion and drawing, in the longitudinal direction, of two single-mode fibres which are disposed parallel to one another, and which exhibit a respective doped core and a defined radially symmetrical refractive index distribution, characterized in that the relative refractive index difference Δ of each respective one of the doped cores with respect to undoped quartz glass within the coupling zone is between 0.04 and 0.2%, preferably between 0.06 and 0.1%, so that the coupling ratio is polarization-independent.

2. Coupler according to Claim 1, characterized in that the coupler possesses a short circular-cylindrical waveguide with two parallel regions of increased refractive index as a zone of intense coupling.

3. Coupler according to Claim 1 or 2, characterized in that the coupling-zone length is between 1.0 and 10 mm, preferably between 2.5 and 8 mm.

4. Coupler according to one of Claims 1 to 3, characterized in that the refractive index of the cores differs in the coupling zone, so that the coupling ratio is, in addition, wavelength-independent.

5. Process for the production of a coupler according to Claim 4, in which process two single-mode fibres, which exhibit a respective defined radially symmetrical refractive index distribution and a doped core, being disposed parallel to one another, are fused together and are drawn in the longitudinal direction, the refractive index distribution of the fibres being selected so that after fusion and drawing the relative refractive index difference Δ of the doped cores with respect to undoped quartz glass within the coupling zone is between 0.04 and 0.2%, characterized in that two similar quartz glass fibres are used, and in that, prior to fusing together, one of the fibres is heated to a temperature of approximately 1300°C to 1400°C over a period of time of a few minutes.

## Revendications

1. Coupleur, obtenu par fusion, diminuant sous forme biconique, de fibres de verre de quartz, qui peut se fabriquer par fusion et étirage, selon la direction longitudinale, de deux fibres monomodes qui sont disposées parallèlement l'une à l'autre et présentent une distribution définie, en symétrie radiale, de l'indice de réfraction,

coupleur caractérisé par le fait que la différence relative d'indice de réfraction Δ entre chacun des coeurs, dopés, et le verre de quartz,non dopé, à l'intérieur de la zone de couplage, vaut entre 0,04 et 0,2%, de préférence entre 0,06 et 0,1%, de sorte que le rapport de couplage est indépendant de la polarisation.

2. Couplage selon la revendication 1, caractérisé par le fait que le coupleur présente un guide d'ondes de forme cylindrique à base circulaire et de faible longueur, avec deux zones orientées parallèlement, d'indice de réfraction plus élevé qu'une zone de couplage fort.

3. Coupleur selon la revendication 1 ou 2, caractérisé par le fait que la longueur de la zone de couplage vaut entre 1,0 et 10mm, de préférence entre 2,5 et 8mm.

4. Coupleur selon l'une des revendications 1 à 3, caractérisé par le fait que l'indice de réfraction des coeurs dans la zone de couplage est différent, de sorte que le rapport de couplage est en outre indépendant de la longueur d'onde.

5. Procédé de fabrication d'un coupleur selon la revendication 4, dans le cas duquel on fait fondre ensemble, disposées parallèlement l'une à l'autre, deux fibres monomodes qui présentent chacune une distribution définie, en symétrie radiale, de l'indice de réfraction ainsi qu'un coeur dopé, et on les étire selon la direction longitudinale , étant précisé que l'on choisit la distribution de l'indice de réfraction des fibres de façon telle qu'après la fusion et l'étirage, la différence relative $\Delta$ entre l'indice de réfraction des coeurs dopés et le verre de quartz, non dopé, à l'intérieur de la zone de couplage vaut entre 0,04 et 0,2%, procédé caractérisé par le fait que l'on emploie deux fibres de verre de quartz indentiques et par le fait qu'avant de les faire fondre ensemble on chauffe l'une des fibres, pendant une durée de quelques minutes, pour la porter à une température d'environ 1300°C à 1400°C.

Fig 1

C

WELLENLÄNGE λ [μm]

DIA 1

C

WELLENLÄNGE λ [μm]

DIA 2

Δc

WELLENLÄNGE λ [μm]

DIA 3